# EUROPEAN PATENT SPECIFICATION

(11) **EP 0 261 120 B1**
(45) Date of publication and mention of the grant of the patent: **02.03.1994**
(21) Application number: 86903481.9
(22) Date of filing: 29.05.1986
(51) Int. Cl.: B62D 7/14

(54) **MULTI-AXLED VEHICLE**
MEHRACHSIGES FAHRZEUG
VEHICULE A AXES MULTIPLES

(30) Priority: 29.05.1985 GB 8513471
(43) Date of publication of application: 30.03.1988
(73) Proprietor: PACCAR U.K. LIMITED, Sandbach, CHeshire CW11 9HZ (GB)
(72) Inventor: COLLINS, John, Frank, Crewe Cheshire CW4 7ER (GB); HOCKENHULL, Charles, Keith, Cheshire CW5 6HD (GB)
(74) Representative: Atkinson, Peter Birch
(86) International application number: GB8600293
(87) International publication number: WO8607021

(56) References cited:
- FR-A- 1 048 700
- FR-A- 1 219 658
- US-A- 1 933 674
- US-A- 2 091 821
- US-A- 2 901 264
- US-A- 3 002 762
- US-A- 3 504 815
- US-A- 4 186 814

## Description

The present invention relates to a multi-axled vehicle in which two of the axles have simultaneously steerable wheels.

In such vehicles, the two axles with steerable wheels are generally the front axles of the vehicle (the wheels of the rear axle being non-steerable) and the steering is effected by steering gear (eg a steering box with a vertically extending steering box lever) which is positioned forwardly of the leading axle and outwardly of the vehicle chassis.

Additionally the bogie generally requires four elliptical springs, (one for each wheel) which means that the suspension is non-compensating.

However, for certain types of highly manoeuvrable vehicles the abovedescribed arrangement is not satisfactory. A particular case is a high mobility off-road vehicle having a centre-articulated bogie with steerable axles, the wheels being larger then in the case of road vehicles. Such vehicles require large steered wheel angles together with large wheel suspension movements and it is found that the long drag links transmitting steering movements from the steering box to the rearmost of two steerable axles interfere with the steering and suspension movements of the wheels.

US-A-3 002 762 discloses a vehicle according to the precharacterising portion of claim 1. The vehicle described in the aforementioned U.S. patent is primarily a road-going vehicle which does not require the same degree of suspension travel/steered wheel angle as the off-road vehicle mentioned above. The steering arrangement shown in the U.S. patent would not be suitable for such an off-road vehicle.

It is an object of the present invention to obviate or mitigate the abovementioned disadvantages.

According to the present invention there is provided a multi-axled vehicle having a two-axle bogie located beneath side frame members of the vehicle chassis, the bogie comprising a suspension arrangement which includes two springs each extending longitudinally of the vehicle from one axle to the other and each being pivotally mounted centrally between the axles about an axis transverse to the longitudinal center line of the vehicle, respective upper and lower radius rods for each axle, and a steering mechanism which includes a steering actuator having an input and an output, the input being associated with steering control means of the vehicle, the output being disposed between the axles, and a linkage arrangement associated with said output of the actuator and being adapted to effect simultaneous steering of the wheels of the bogie in accordance with output from the actuator, said linkage arrangement incorporating a pair of drag links each adapted to effect steering of the wheels on one of the axles and each having a first end pivotally associated with the output of the steering actuator and a second end pivotal in the linkage mechanism characterised in that the steering actuator is a high gear ratio steering actuator and is located between said side frame members and in that the pivots on the ends of said drag links are positioned to ensure no significant interference to the motion of the drag links or wheels during suspension travel.

It should be appreciated that the above reference to the steering being between the axles does not necessarily require that the actuator is at the same horizontal level as the axle. Similarly the reference does not require that the actuator is at the same horizontal level the side members. For example, the actuator may be below the level of the side frame members.

The positioning of the steering actuator between the side frame members and the axles has the advantage that it is possible to arrange the linkage mechanism such that there is no interference between the linkage and the wheels for large steered angles thereof, even when the wheels are wide and of large diameter, such as used on high mobility off-road vehicles. It is therefore in relation to such vehicles that the invention has particular application. Generally, in such vehicles the axles with steerable wheels will be the front axles of the vehicle.

Preferably the two axles with steerable wheels are provided as a centre articulated bogie for the vehicle. A centre articulated bogie is preferred for off-road vehicles as it allows large suspension and hence wheel movements and also maintains nominal load sharing between the wheels of the bogie. Thus obstacles are crossed without loss of wheel contact with the ground and consequent high loading of wheels left in contact with the ground which could cause sinkage and bogging. This is achieved by virtue of the springs being pivoted about their centre thus acting as a balance beam as well as a spring.

The invention will be further described by way of example only with reference to the accompanying drawings, in which
Fig. 1 is a side view taken mid-way along the transverse centre line of one embodiment of centre articulated bogie for incorporation in a vehicle in accordance with the invention;
Fig. 2 is a diagrammatic plan view of one arrangement of steering mechanism for use in the bogie shown in Fig. 1;
Fig. 3 shows the mechanism of Fig. 2 in the left lock position; and
Fig. 4 to 17 show various additional arrangements of steering mechanism for use in the bogie shown in Fig. 1.

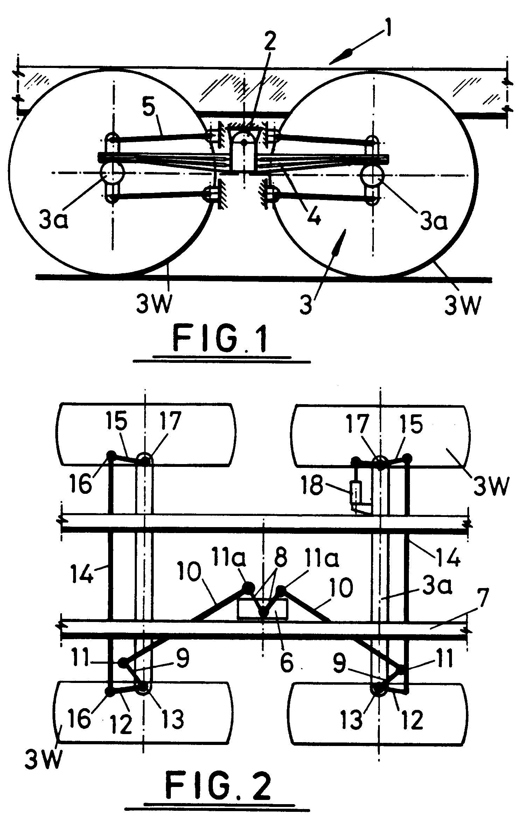

The bogie 1 illustrated in Fig. 1 is mounted by means of a centre trunnion 2 on a vehicle and comprises twin steerable wheel and axle units 3 (which provide the front axles of the vehicle), including axle beams 3a and wheels 3w. The wheels 3w are mounted on the ends of axle beams 3a by conventional swivel axles which allow steering movement of wheels 3w relative to axle beams 3a. The suspension for the bogie comprises a pair of leaf springs 4 (only one illustrated) provided one at each side of the bogie and extending between the two axle beams 3a. Orientation of the axles is controlled by radius rods 5.

As the trunnion 2 is midway between the axles 3a, and the spring 4 is symetrical about the trunnion, then the imposed load on each axle is equal. The bogie is free to articulate about the trunnion i.e. one axle can rise whilst the other falls, the limit of upward movement being the side frame members.

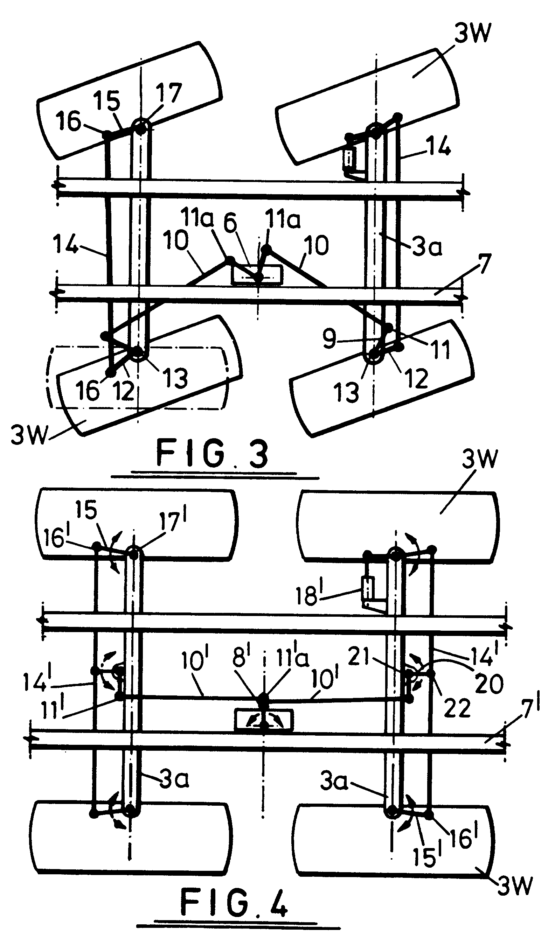

Referring now to Figs. 2 and 3 it should firstly be understood that in these Figures (and also in Figs. 4-17) the left-most axle is the front axle of the vehicle.

In the steering arrangement shown in Fig. 2, the steering movement of the two wheels 3w is controlled by a common steering box 6 located about half-way between the axles and positioned to one side of the vehicle centre line just inboard of a chassis side-rail 7. Steering box 6 is generally conventional in that it is a form of high ratio gear box with an input shaft (not shown) associated the steering wheel (or the like) in the cab of the vehicle, and an output shaft (not shown) for transmitting the desired steering movements to the road wheels of the vehicle. The output shaft of the steering box 6 shown in Fig. 2 is rotationally fast with two steering box levers 8 angled to each other as shown.

The two wheels 3w of the bogie 1 adjacent side rail 7 are each associated with steering arms 9. These arms 9 are connected to the steering box levers 8 by means of drag links 10 via universal couplings provided by pivoting socket ends 11 and 11a. The arms 9 are each rigidly attached to respective steering levers 12, with the assembly of arms 9 and levers 12 being rotatable about pivot 13.

Track rods 14 extend transversely of the vehicle chassis and are connected at one end to the levers 12 and at the other end to further steering levers 15. The connection of the track rods 14 to the levers 12 and 15 is via pivoting socket ends 16. The end of lever 15 remote from track rod 14 is free to rotate about pivot 17.

Each steering lever 15 is fast with the swivel axle of the associated wheel. Similarly the steering arm 9 and/or the attached steering lever 12 is/are also fast with the swivel axle of the associated wheel.

In the configuration illustrated in Fig. 2 the front and rear wheels 3w of the bogie are positioned for movement of the vehicle in a straight line. When the vehicle is to be turned the assembly of steering box levers 8 is rotated either right or left (depending on the direction of rotation of the output shaft from the steering box 6) and this motion is effective to steer all wheels to the right or left as the case may be. More particularly, Fig. 3 shows the bogie in the left lock position. It will be seen that, as compared with Fig. 2, the assembly of steering box levers 8 has been rotated anti-clockwise. This motion is transmitted by drag links 10 to effect anti-clockwise rotation (about pivot 13) of each steering arm 9/steering lever 12 assembly which thus effect movement of the associated swivel axles and hence associated wheels. Simultaneously, the anti-clockwise rotation of each steering arm 9/steering lever 12 assembly is transmitted via track rods 14 to steering lever 15 which thus moves anti-clockwise about pivot 17. This movement of levers 15 simultaneously effects movement of the associated swivel axles and hence the associated wheels. It will be appreciated that, in the full lock condition, there is no interference between the wheels 3w and the drag links 10.

If it is desired that the wheels of the second axle to turn through a smaller angle than those of the first axle then this may be achieved by varying the lengths of the levers 8 with respect to each other and/or by varying the lengths of the steering arms 9 with respect to each other.

Right lock is obviously achieved by the opposite of the above described movement.

If desired, a booster cylinder 18 may be incorporated as shown in the bogie to assist in the steering of the wheels 3w.

It will be appreciated that the universal couplings 11, 11a and 16 allow for suspension travel of the wheels 3w.

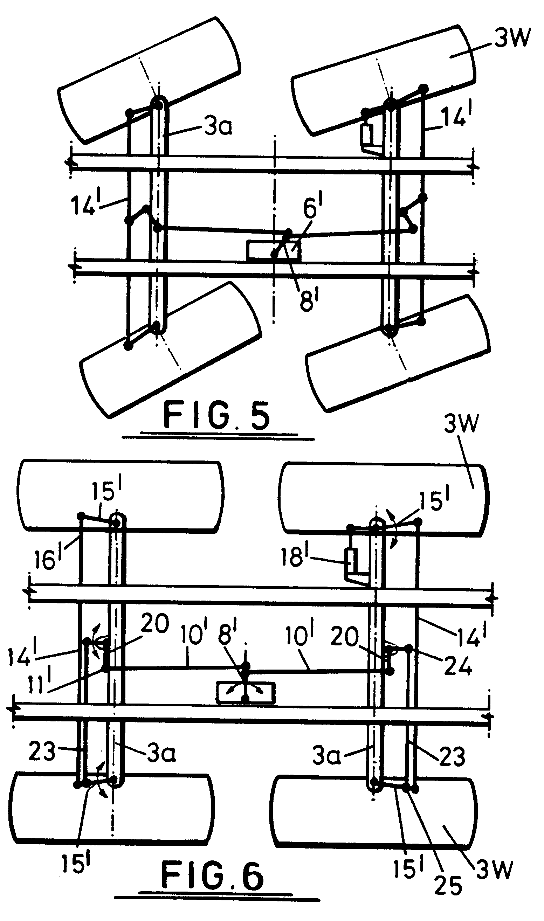

The steering mechanism illustrated in Figs. 4 and 5 is similar to that shown in Figs. 2 and 3 and like parts are designated by the same reference numerals suffixed with '. In the case of Fig. 4, the steering box 6' has a single steering box lever 8' which, as illustrated, is horizontally disposed but could be vertical.

Steering box lever 8' is associted via a universal coupling 11a' with two drag links 10' extending generally along the centre line of the vehicle chassis. At their ends remote from lever 8', links 10' are pivotally attached by universal couplings 11 to right-angled relay levers 20. These levers 20 are pivoted as at 21 on a bearing mounted on the axle beam 3a and are pivotally attached as at 22 to the mid-points of tie rods 14'. The ends of tie rods 14' are pivotally attached by universal couplings 16' to steering levers 15' which are fast with the associated swivel axles.

The manner in which the arrangement shown in Fig. 4 is effective to steer the wheels 3w will be clear from Fig. 5 which shows the left lock position of the wheels.

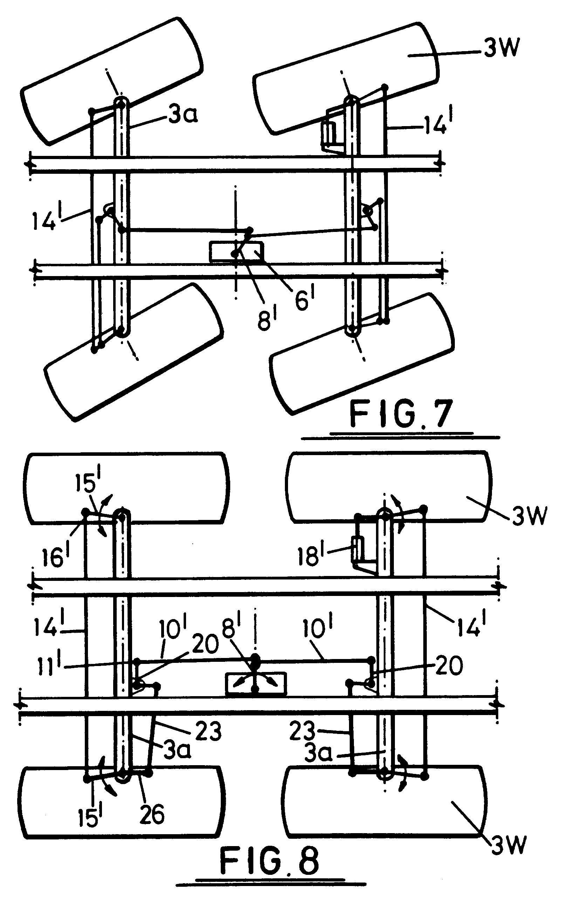

The arrangement shown in Fig. 6 and 7 is generally similar to that shown in Figs. 4 and 5 save that the motion of each of relay levers 20 is transmitted to an associated steering lever 15' by an additional tie rod 23. One end of tie rod is connected to lever 20 by a pivot 24 and the other end is connected to steering lever 15' by a pivot 25.

The operation of the arrangement shown in Fig. 6 will be clearly understood from Fig. 7 which shows the left lock condition.

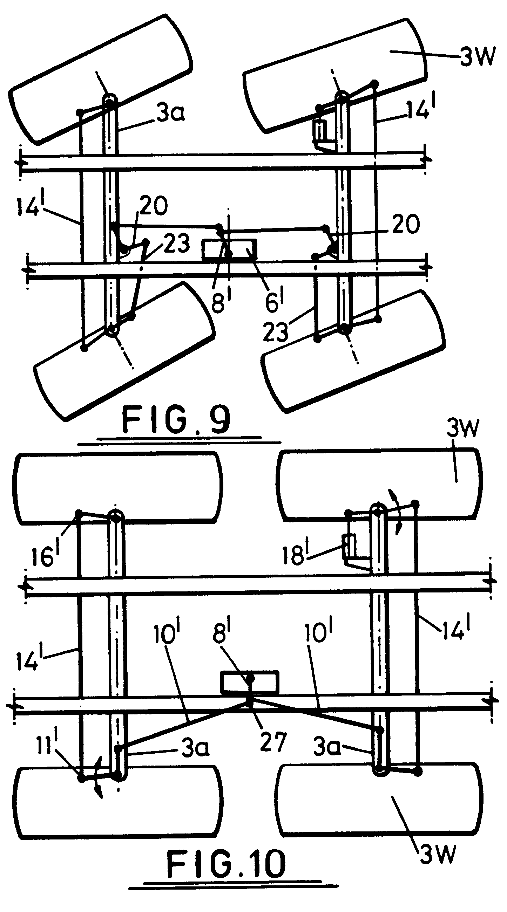

The arrangement shown in Figs. 8 and 9 is similar to that shown in Figs. 6 and 7 save that the relay levers 20 are positioned on the same side of the axles 3a as the steering box 8'. This necessitates re-positioning of tie rods 23 (as shown) which are attached to an extension 26 of steering lever 15'.

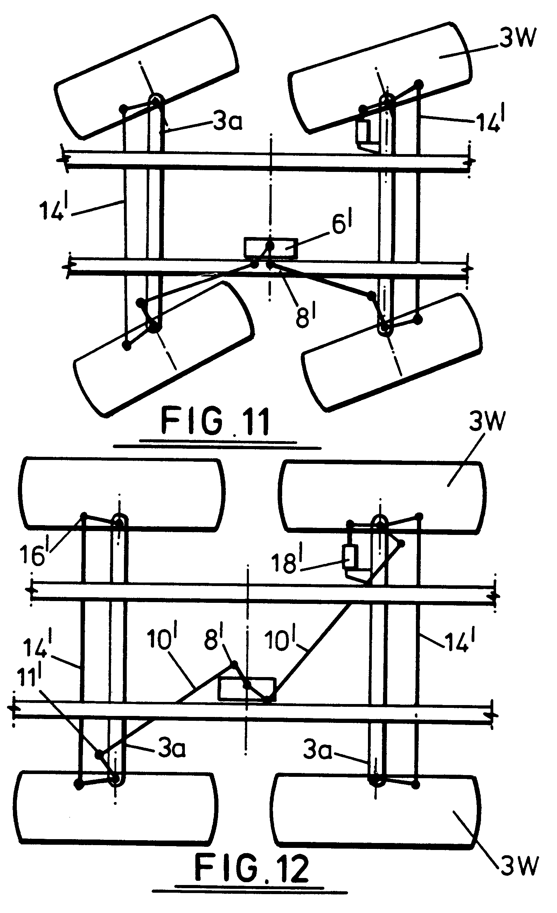

Figs. 10 and 11 show a modification of Fig. 2 but in which the steering box 6' has only one steering lever 8'. Both drag links 10' are pivotally mounted as at 27 on this lever 8'.

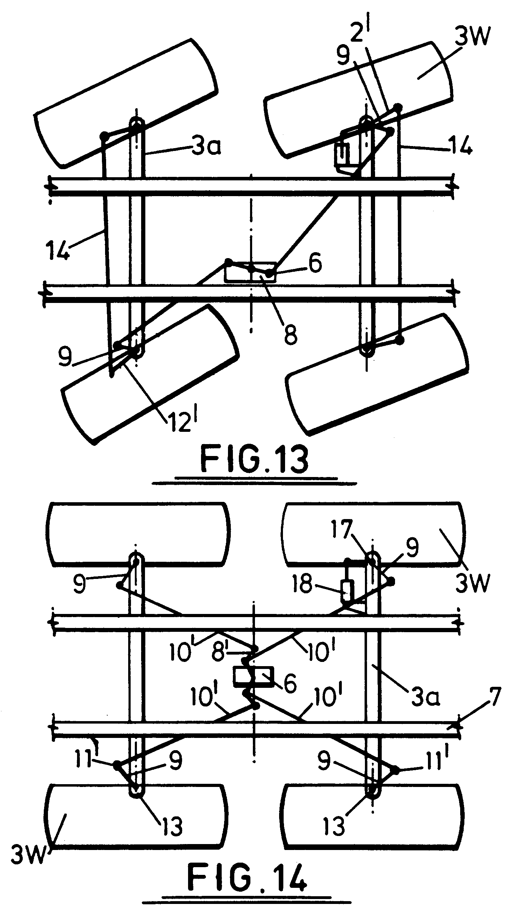

Figs. 12 and 13 show a further modification of Fig. 2 in which the steering levers 8' are associated with diagonally opposed steering arms 9'.

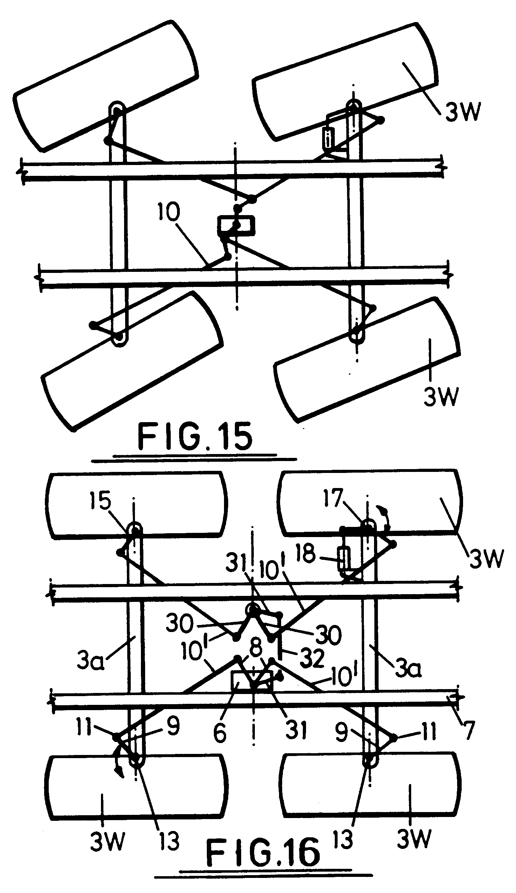

In the arrangement shown in Figs. 14 and 15, the steering box 6' is located centrally between the wheels 3w and is associated with a compound steering lever 8'. This lever 8' is pivotally attached to four drag links 10' each extending to, and being pivotally attached to, a respective steering lever 9 fast with the swivel axle of the associted wheel 3w.

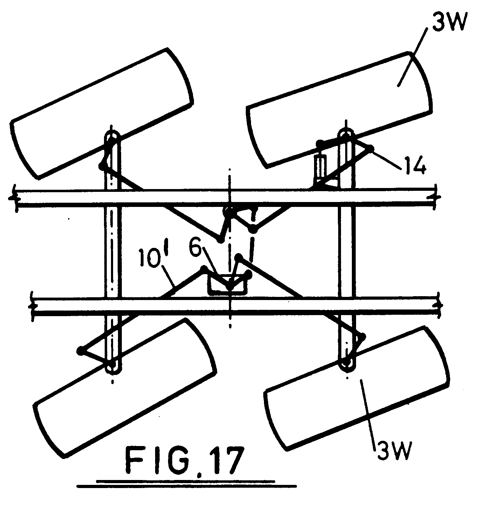

In the arrangement shown in Figs. 16 and 17, the steering box 6' is off set from the longitudinal centre line of the bogie. The two wheels 3w on the same side of the longitudinal centre-line are steered in exactly the same way as shown in Fig. 2. A mirror image system is located on the opposite side of the centre line and comprises a double steering lever 30 and drag links 10'. An arrangement of two steering arms 31 connected by a control rod 32 serves to transmit the output of the steering box 6' to the double steering lever 30.

Alternatively, a second steering box could be used to drive lever 30, this second box being connected to the first box by shafts and bevel boxes.

The invention has a number of advantages. In particular, the location of the steering box (6 or 6') permits drag link runs which do not hinder steered wheel angle within the maximum practical limits. This permits much tighter turning circles than normal which can be very advantageous where the vehicle has to manoeuvre in a limited space. The pivoting socket ends 11 (or 11') and 16 (or 16') allow vertical and horizontal movement of the drag links 10 (or 10'), thus allowing suspension movements as indicated in Fig. 1. The arrangement permits large vertical wheel movements without steering input as the inner ends of the drag links (10 or 10') are located close to the centre of the arc about which the axles (3a or 3a') move during their suspension travel with a centre articulated bogie. Finally, the arrangement allows the use of the two leaf springs 4 so that the suspension is compensating.

## Claims

1. A multi-axled vehicle having a two-axle bogie (1) located beneath side frame members (7) of the vehicle chassis, the bogie comprising a suspension arrangement which includes two springs (4) each extending longitudinally of the vehicle from one axle (3a) to the other (3a) and each being pivotally mounted centrally between the axles (3a) about an axis transverse to the longitudinal center line of the vehicle, respective upper and lower radius rods (5) for each axle, and a steering mechanism which includes a steering actuator (6) having an input and an output, the input being associated with steering control means of the vehicle, the output being disposed between the axles, and a linkage arrangement (8, 9, 10, 11) associated with said output of the actuator (6) and being adapted to effect simultaneous steering of the wheels (3w) of the bogie (1) in accordance with output from the actuator (6), said linkage arrangement (8, 9, 10, 11) incorporating a pair of drag links (10) each adapted to effect steering of the wheels (3w) on one of the axles (3a) and each having a first end (11a) pivotally associated with the output of the steering actuator (6) and a second end (11) pivotal in the linkage mechanism characterised in that the steering actuator is a high gear ratio steering actuator and is located between said side frame members and in that the pivots on the ends (11, 11a) of said drag links (10) are positioned to ensure no significant interference to the motion of the drag links (10) or wheels (3w) during suspension travel.

2. A vehicle as claimed in claim 1 wherein each of said wheels (3w) is associated with a respective steering arm (12,15) which forms part of the linkage mechanism and wherein the linkage mechanism further comprises, for each axle (3a), a respective track rod (14) which extends transversely of the vehicle between the wheels (3w) of the axle (3a) and which is pivotally connected to each of the steering arms (12,15) of the wheels of that axle, each of said drag links (10) being arranged to effect movement of the track rod (14) transversely of the vehicle whereby steering movement of the wheels (3w) is effected.

3. A vehicle as claimed in claim 2 wherein for each axle (3a), one of the steering arms (12) is a first arm of an angled two arm lever, and the second ends (11) of said drag links (10) are pivotally connected to the second arm (9) of this lever.

4. A vehicle as claimed in claim 3, wherein the output of said steering actuator (6) is fast with two arms (8) in fixed angular relationship, and each of these arms (8) is pivotally associated with the first end (11a) of a respective one of said drag links (10).

5. A vehicle as claimed in claim 3, wherein each of said track rods (14) is pivotally attached between its ends to a first arm of a pivotal two arm lever whereof the second arm is pivotally connected to the second end (11) of the drag link (10).

6. A vehicle as claimed in claim 1 wherein the said two axles (3a) with steerable wheels (3w) are the front axles of the vehicle.

7. A vehicle as claimed in claim 1, wherein for each axle, one of the steering arms is a first arm (12) of an angled two arm lever, and the second ends (11) of said drag links (10) are pivotally connected to the second arm (9) of this lever.

8. A vehicle as claimed in claim 1, wherein the steering actuator (6) is a geared steering actuator.

## Patentansprüche

1. Mehrachsiges Fahrzeug mit einem zweiachsigen Bogie (1), welcher sich unter Seitengestellgliedern (7) des Fahrzeugchassis befindet, wobei der Bogie folgendes umfaßt: eine Federungsanordnung, die zwei Federn (4) einschließt, die sich jeweils längs des Fahrzeugs von einer Achse (3a) zur anderen (3a) erstrecken und jeweils in der Mitte zwischen den Achsen (3a) schwenkbar um eine Achse montiert sind, die quer zur Längsmittellinie des Fahrzeugs verläuft, obere bzw. untere Diagonalstreben (5) für jede der Achsen und einen Lenkmechanismus, der ein Lenkstellglied (6) mit einem Eingang und einem Ausgang einschließt, wobei der Eingang der Lenksteuereinrichtung des Fahrzeugs zugeordnet ist, der Ausgang zwischen den Achsen angeordnet ist und eine Gestängeanordnung (8, 9, 10, 11) dem Ausgang des Stellgliedes (6) zugeordnet ist und dafür eingerichtet ist, ein gleichzeitiges Lenken der Räder (3w) des Bogies (1) gemäß der Ausgabe vom Stellglied (6) zu bewirken, wobei zur Gestängeanordnung (8, 9, 10, 11) ein Paar Lenkzwischenstangen (10) gehören, die jeweils dafür eingerichtet sind, das Lenken der Räder (3w) an einer der Achsen (3a) zu bewirken und die jeweils ein erstes Ende (11a), welches schwenkbar dem Ausgang des Lenkstellgliedes (6) zugeordnet ist, und ein zweites Ende (11) aufweisen, welches im Gestängemechanismus schwenkbar ist, dadurch gekennzeichnet, daß das Lenkstellglied ein Lenkstellglied mit hohem Übersetzungsverhältnis ist und sich zwischen den genannten Seitengestellgliedern befindet und daß die Drehpunkte an den Enden (11, 11a) der Lenkzwischenstangen (10) so positioniert sind, daß sie die Abwesenheit einer ins Gewicht fallenden Störung der Bewegung der Lenkzwischenstangen (10) bzw. der Räder (3w) während der Bewegung der Federung gewährleisten.

2. Fahrzeug nach Anspruch 1, bei dem die Räder (3w) jeweils einem Lenkarm (12) bzw. (15) zugeordnet sind, der Teil des Gestängemechanismus bildet, und bei dem der Gestängemechanismus ferner für jede Achse (3a) eine jeweilige Spurstange (14) umfaßt, die sich quer zum Fahrzeug zwischen den Rädern (3w) der Achse (3a) erstreckt und die schwenkbar mit jedem der Lenkarme (12, 15) der Räder dieser Achse verbunden ist, wobei die Lenkzwischenstangen (10) jeweils so angeordnet sind, daß sie eine Bewegung der Spurstange (14) quer zum Fahrzeug bewirken, wodurch eine Lenkbewegung der Räder (3w) bewirkt wird.

3. Fahrzeug nach Anspruch 2, bei dem für jede Achse (3a) einer der Lenkarme (12) ein erster Arm eines abgewinkelten zweiarmigen Hebels ist und die zweiten Enden (11) der Lenkzwischenstangen (10) schwenkbar mit dem zweiten Arm (9) dieses Hebels verbunden sind.

4. Fahrzeug nach Anspruch 3, bei dem der Ausgang des Lenkstellgliedes (6) in fester Winkelbeziehung fest mit zwei Armen (8) ist und diese Arme (8) jeweils schwenkbar dem ersten Ende (11a) einer jeweiligen Lenkzwischenstange (10) zugeordnet sind.

5. Fahrzeug nach Anspruch 3, bei dem jede der Spurstangen (14) schwenkbar zwischen ihren Enden an einem ersten Arm eines schwenkbaren zweiarmigen Hebels angebracht ist, dessen zweiter Arm schwenkbar mit dem zweiten Ende (11) der Lenkzwischenstange (10) verbunden ist.

6. Fahrzeug nach Anspruch 1, bei dem die zwei Achsen (3a) mit lenkbaren Rädern (3w) die Vorderachsen des Fahrzeugs sind.

7. Fahrzeug nach Anspruch 1, bei dem für jede Achse einer der Lenkarme ein erster Arm (12) eines abgewinkelten zweiarmigen Hebels ist und die zweiten Enden (11) der Lenkzwischenstangen (10) schwenkbar mit dem zweiten Arm (9) dieses Hebels verbunden sind.

8. Fahrzeug nach Anspruch 1, bei dem das Lenkstellglied (6) ein Lenkstellglied mit Getriebe ist.

## Revendications

1. Véhicule multi-essieu ayant un bogie (1) à deux essieux situé en-dessous des membres de cadre (7) latéraux du châssis du véhicule, le bogie comprenant un agencement de suspension qui comporte deux ressorts (4) chacun s'étendant longitudinalement par rapport au véhicule depuis un essieu (3a) jusqu'à l'autre (3a) et chacun étant monté sur pivot de manière centrale entre les essieux (3a) autour d'un axe transversal par rapport à la ligne de centre longitudinale du véhicule, des bras de rappel respectivement supérieur et inférieur (5) pour chaque essieu, et un mécanisme de direction qui comporte un dispositif de commande de direction (6) ayant une entrée et une sortie, l'entrée étant associée à un moyen de contrôle de la direction du véhicule, la sortie étant disposée entre les essieux et un agencement de timonerie (8, 9, 10, 11) associé à ladite sortie du dispositif de commande (6) et étant adapté pour effectuer la direction simultanée des roues (3w) du bogie (1) selon la sortie provenant du dispositif de commande (6), ledit agencement de timonerie (8, 9, 10, 11) comportant une paire de barres intermédiaires de direction (10) chacune adaptée pour effectuer la direction des roues (3w) sur un des essieux (3a) et chacune présentant une première extrémité (11a) associée par un pivot à la sortie du dispositif de commande de direction (6) et une seconde extrémité (11) capable de pivoter dans le mécanisme de timonerie, caractérisé en ce que le dispositif de commande de direction est un dispositif de commande de direction à rapport de transmission élevé et est situé entre les membres de cadre latéraux, et en ce que les pivots aux extrémités (11, 11a) desdites barres intermédiaires de direction (10) sont positionnés pour assurer qu'aucune interférence significative du mouvement des barres intermédiaires de direction (10) ou des roues (3w) ne se produise pendant le déplacement de la suspension.

2. Véhicule selon la revendication 1, dans lequel chacune des roues (3w) est associée à un bras de direction (12, 15) respectif qui fait partie du mécanisme de timonerie et dans lequel le mécanisme de timonerie comprend en outre, pour chaque essieu (3a), une barre d'accouplement (14) qui s'étend transversalement au véhicule entre les roues (3w) de l'essieu (3a) et qui est raccordée par pivot à chacun des bras de direction (12, 15) des roues de cet essieu, chacune des barres intermédiaires de direction (10) étant agencée pour produire un mouvement de la barre d'accouplement (14) transversalement au véhicule grâce auquel le mouvement de direction des roues (3w) est effectué.

3. Véhicule selon la revendication 2, dans lequel pour chaque essieu (3a), un des bras de direction (12) est un premier bras d'un levier à deux bras angulaire, et les secondes extrémités (11) desdites barres intermédiaires de direction (10) sont raccordées par pivot au second bras (9) de ce levier.

4. Véhicule selon la revendication 3, dans lequel la sortie dudit dispositif de commande de direction (6) est ferme avec deux bras (8) en relation angulaire fixe et chacun de ces bras (8) est associé par pivot à la première extrémité (11a) d'une barre intermédiaire de direction respective (10) parmi celles-ci.

5. Véhicule selon la revendication 3, dans lequel chacune des barres d'accouplement (14) est attaché par pivot entre ses extrémités à un premier bras d'un levier pivotant à deux bras dont le second bras est raccordé par pivot à la seconde extrémité (11) de la barre intermédiaire de direction (10).

6. Véhicule selon la revendication 1, dans lequel lesdits deux essieux (3a) à roues (3w) capables de direction sont les essieux avant du véhicule.

7. Véhicule selon la revendication 1, dans lequel pour chaque essieu, l'un des bras de direction est un premier bras (12) d'un levier à deux bras angulaire, et les secondes extrémités (11) desdites barres intermédiaires de direction (10) sont raccordées par pivot au second bras (9) de ce levier.

8. Véhicule selon la revendication 1, dans lequel le dispositif de commande de direction (6) est un dispositif de commande de direction à engrenage.
